# EUROPÄISCHE PATENTSCHRIFT

(11) **EP 1 238 580 B1**
(45) Veröffentlichungstag und Bekanntmachung des Hinweises auf die Patenterteilung: **06.09.2006**
(21) Anmeldenummer: 02004718.9
(22) Anmeldetag: 01.03.2002
(51) Int. Cl.: A01F 12/44

(54) **Sieb für einen Mähdrescher**
Sieve for a combine harvester
Crible pour une moissonneuse-batteuse

(30) Priorität: 10.03.2001 DE 10111531
(43) Veröffentlichungstag der Anmeldung: 11.09.2002
(73) Patentinhaber: DEERE & COMPANY, Moline, Illinois 61265-8098 (US)
(72) Erfinder: Lauer, Fritz, 66894 Krähenberg (DE)
(74) Vertreter: Holst, Sönke

(56) Entgegenhaltungen:
- EP-A- 1 068 792
- EP-A- 1 068 793
- EP-A- 1 166 617
- US-A- 4 502 493
- US-A- 4 897 072
- US-A- 5 525 108
- US-A- 6 117 006

## Beschreibung

Die Erfindung betrifft eine Reinigungseinrichtung für einen Mähdrescher mit einem Sieb, das mit einem Rahmen und darin befestigten, verstellbaren Lamellen ausgestattet ist, die mittels eines motorbetriebenen Verstellantriebs einstellbar sind, wobei das Sieb mindestens zwei in einer gemeinsamen Ebene in Vorwärtsfahrtrichtung des Mähdreschers seitlich nebeneinander angeordnete Teilsiebe mit jeweils einem Rahmen umfasst, wobei den Teilsieben getrennte Verstellantriebe zugeordnet sind.

Es ist aus der DE 71 45 564 U, der EP 1 068 792 A und der EP 1 068 793 A bekannt, einen Rahmen eines Siebs der Reinigungseinrichtung eines Mähdreschers mit einem elektromotorischen Verstellantrieb zur Einstellung der Sieböffnungsweite zu versehen. Zur Vermeidung von Spiel, das durch zwischengeschaltete Übertragungsmechanismen in Form von Bowdenzügen oder dergleichen zwischen dem Verstellantrieb und den Lamellen der Siebe entsteht, ist der Verstellantrieb am Siebrahmen angebracht.

Bei der Siebverstellung gemäß der EP 1 068 792 A werden zwei seitlich nebeneinander angeordnete Teilsiebe des Obersiebs durch einen gemeinsamen Verstellantrieb eingestellt. Dazu ist eine Verbindungsstange oder eine Gewindespindel zwischen den Teilsieben vorgesehen, die die Antriebsbewegung des Verstellantriebs von einem Teilsieb auf das andere Teilsieb überträgt. Bei einer anderen Ausführungsform wird beiden Teilsieben ein unabhängiger Verstellantrieb zugeordnet.

Die der Erfindung zugrunde liegende Aufgabe wird darin gesehen, ein aus mehreren Teilsieben aufgebautes Sieb eines Mähdreschers dahingehend weiterzuentwickeln, dass eine genauere Einstellung der Lamellen möglich ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Bei einem Sieb eines Mähdreschers, das aus zwei in einer Ebene liegenden Teilsieben zusammengesetzt ist, ist den Teilsieben jeweils ein Verstellantrieb zugeordnet. Sind mehr als zwei Teilsiebe vorhanden, kann jedes der Teilsiebe einen eigenen Verstellantrieb erhalten, obwohl auch denkbar wäre, ein erstes Teilsieb mit einem ersten Verstellantrieb zu versehen und zwei oder mehr weitere Teilsiebe mit einem gemeinsamen zweiten Verstellantrieb auszustatten. Die beschriebene Siebeinrichtung eines Mähdreschers erlaubt über eine entsprechende automatische Steuerung eine separate Einstellung der Lamellen der Teilsiebe und auch unterschiedliche Einstellungen der Lamellen der Teilsiebe. Derartige unterschiedliche Einstellungen sind beim Hangeinsatz sinnvoll, wozu vorgeschlagen wird, das hangauf befindliche Teilsieb weiter als das hangab befindliche Teilsieb zu schließen. Durch diese Maßnahme wird der vom Reinigungsgebläse erzeugte Luftstrom gezwungen, im wesentlichen durch das hangab befindliche Sieb zu strömen, um dort die naturgemäß dickere Schicht besser zu durchdringen. Gleichzeitig wird am dünner belegten hangaufwärts gelegenen Sieb eine Abscheidung unerwünschter Nichtkornbestandteile vermieden. Das Ergebnis ist eine höhere Leistung des Mähdreschers im Hangeinsatz.

Die Teilsiebe sind in einer Ebene und in der Regel bezüglich der Vorwärtsfahrtrichtung des Mähdreschers seitlich nebeneinander angeordnet. Als aus Teilsieben aufgebaute Siebe kommen sowohl Unter- als auch Obersiebe in Frage.

Die Verstellantriebe, die elektrische, hydraulische oder pneumatische, eine Linear- oder Rotationsbewegung bereitstellende Motoren aufweisen können, sind mit zur Energieversorgung dienenden Anschlusselementen versehen, welche sich vorzugsweise beim Herausnehmen der Teilsiebe aus dem Siebkasten selbsttätig von im Siebkasten angeordneten, dort verbleibenden Anschlüssen trennen und beim Einbauen selbsttätig damit verbunden werden. Dadurch wird der Aus- und Einbau der Teilsiebe wesentlich vereinfacht und beschleunigt.

In einer weiteren Ausbildung können die Teilsiebe auch in Abhängigkeit von Signalen von Sensoren gesteuert werden, die den Teilsieben zugeordnet sind. Derartige Sensoren können die Abscheidung von Korn oder Nichtkornbestandteilen unterhalb der Teilsiebe erfassen. Ihre Signale werden einer geeigneten Steuerung oder Regelung zugeführt, die die Verstellantriebe der Teilsiebe derart ansteuert, dass für jedes Teilsieb eine Optimierung der Abscheidung und der Reinheit erzielt wird. Dies ist umso einfacher, je mehr Verstellantriebe bzw. separat verstellbare Teilsiebe verwendet werden.

In den Zeichnungen sind zwei nachfolgend näher beschriebene Ausführungsbeispiele der Erfindung dargestellt. Es zeigt:
- Fig. 1: eine Seitenansicht eines landwirtschaftlichen Mähdreschers, in der die Dresch-, Trenn-und Reinigungseinrichtungen gezeigt sind,
- Fig. 2: eine Draufsicht auf eine erste Ausführungsform der Verstellvorrichtungen an der Reinigungseinrichtung,
- Fig. 3: eine Draufsicht auf eine zweite Ausführungsform der Verstellvorrichtungen an der Reinigungseinrichtung, und
- Fig. 4: eine Seitenansicht des Antriebs der Lamellen.

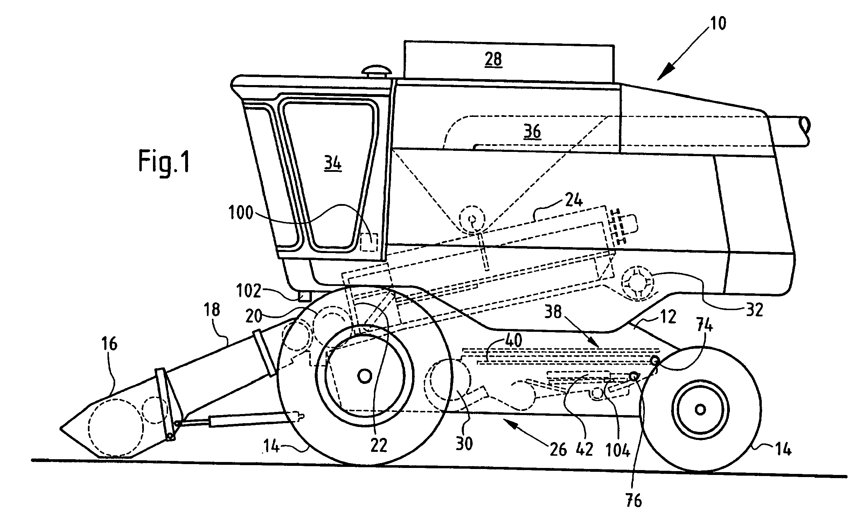

Figur 1 zeigt die Seitenansicht eines selbstfahrenden landwirtschaftlichen Mähdreschers 10. Der Mähdrescher 10 umfasst eine tragende Struktur 12 mit Rädern 14. Die tragende Struktur 12 umfasst zwei sich axial erstreckende Seitenbleche, zwischen denen die verschiedenen Verarbeitungseinrichtungen für das Erntegut angeordnet sind. Vom Mähdrescher 10 erstreckt sich ein Schneidwerk 16 nach vorn, das geerntetes Gut einem Schrägförderer 18 zuführt. Der Schrägförderer 18 enthält einen Förderer, um das geerntete Gut den Dresch-, Trenn- und Reinigungseinrichtungen zuzuführen, die zwischen den Seitenblechen des Mähdreschers 10 angeordnet sind. Obwohl die vorliegende Erfindung als an einem Axialflussmähdrescher angebracht offenbart wird, kann sie auch an konventionellen und anderen Mähdrescherkonfigurationen mit einer Reinigungseinrichtung verwendet werden.

Bei dem dargestellten Mähdrescher 10 führt der Schrägförderer 18 das geerntete Gut einer sich quer erstreckenden Leittrommel 20 zu, die das Gut durch einen Einlassübergangsbereich 22 einer axialen Dresch- und Trenneinrichtung 24 zuführt. Korn und Spreu werden von der axialen Dresch- und Trenneinrichtung 24 einer Reinigungseinrichtung 26 zugeführt. Die Reinigungseinrichtung 26 führt das saubere Korn wiederum einem Korntank 28 zu und die Spreu wird durch das Reinigungsgebläse 30 an der Rückseite des Mähdreschers hinaus geblasen. Erntegut, das weder Korn noch Spreu ist, wird von der axialen Dresch- und Trenneinrichtung 24 einer quer angeordneten Leittrommel 32 zugeführt, die das Material an der Rückseite des Mähdreschers 10 hinaus befördert. Zeitweise im Korntank 28 gespeichertes Erntegut kann durch Betätigung einer Entladeförderschnecke 36 durch einen Bediener in der Bedienerkabine 34 entladen werden. Die Dresch- und Trenneinrichtung und die Reinigungseinrichtung sind zwischen den Seitenblechen der tragenden Struktur 12 angeordnet.

Bei dem Mähdrescher 10 sind, wie dargestellt, ein Obersieb 40 und ein Untersieb 42 übereinander angeordnet, welche sich jeweils in zwei in einer Ebene nebeneinander liegende Teilsiebe aufteilen. Die Siebe 40, 42 selbst vollführen während des Betriebes der Reinigungseinrichtung 26 eine Schwingung derart, dass das von der Dresch- und Trenneinrichtung 24 abgetrennte Erntegut von der der Dresch- und Trenneinrichtung 24 zugewandten Seite der Siebe 40, 42 aufgenommen und entgegen der Fahrtrichtung des Mähdreschers 10 weitergefördert wird. Zur Erzielung des optimalen Reinigungsgrades der Reinigungseinrichtung 26 kann die Gebläsedrehzahl und die Öffnungsweite der Siebe 40, 42 verändert werden. Erfindungsgemäß sind den Sieben 40 bzw. 42 jeweils zwei Verstellantriebe 74 bzw. 76 zur Verstellung der Sieböffnungsweite zugeordnet.

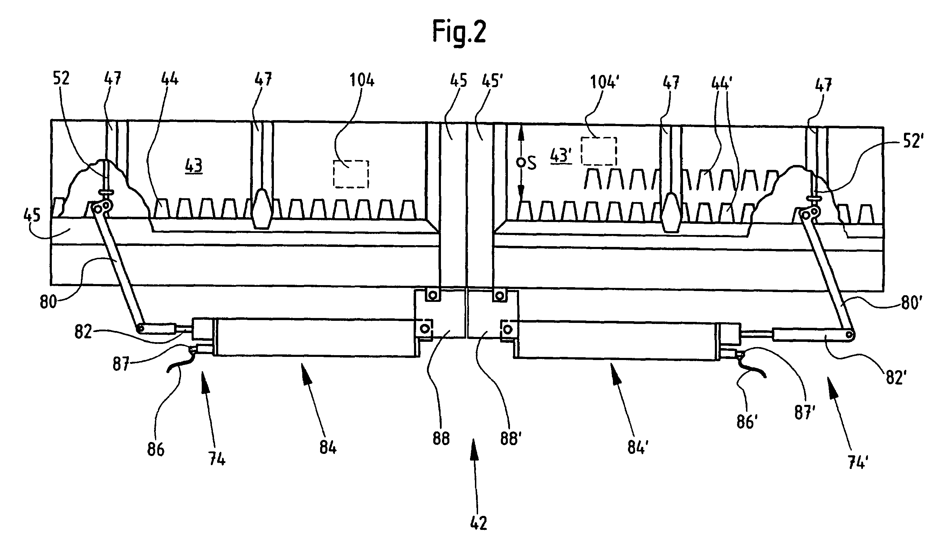

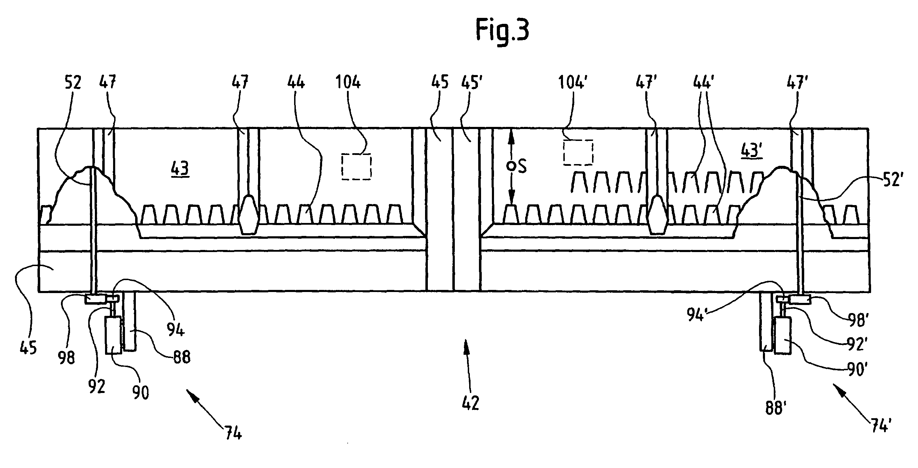

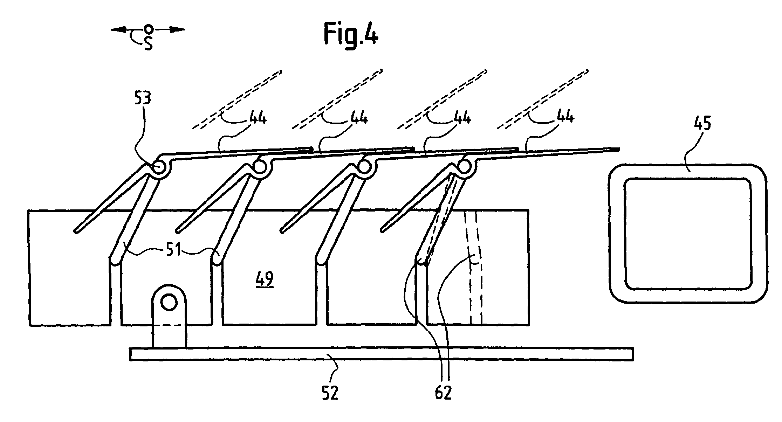

Dazu sind das Obersieb 40 und das Untersieb 42 mit quer verlaufenden, einstellbaren Lamellen 44 versehen, die in den Figuren 2 und 3 gezeigt und in einem rechtwinkligen Rahmen 45 befestigt sind, der von den Seitenwänden des Siebkastens 38 getragen wird. Jede der Lamellen 44 ist, wie anhand der Figur 4 erkennbar ist, mit einer Kurbelwelle 53 ausgestattet, die einen Kurbelarm 51 aufweist. Der Kurbelarm 51 ist in einem Schlitz einer sich in Fahrtrichtung des Mähdreschers 10 erstreckenden Verstellschiene 49 angeordnet. Die Verstellschiene 49 ist unterhalb eines einer Verstellstange 52 benachbarten Mittelstegs 47 des Rahmens 45 angeordnet und steht mit der Verstellstange 52 in Antriebsverbindung. Durch eine axiale Bewegung der Verstellstange 52 kann auf diese Weise mit dem Verstellantrieb 76 die Winkelstellung aller Lamellen 44 eines Teilsiebs 43, 43' (s. unten) des Untersiebs 42 und mit dem Verstellantrieb 74 die Winkelstellung aller Lamellen 44 eines Teilsiebs des Obersiebs 40 eingestellt werden. Die Verstellstange 52 durchdringt an der Rückseite des Siebkastens 38 den Rahmen 45 und ist in ihrer Längsrichtung verschiebbar gelagert.

In Figur 2 ist ein Untersieb 42 mit einer ersten Ausführungsform eines erfindungsgemäßen Verstellantriebs 74 dargestellt. Das Untersieb 42 teilt sich in die zwei nebeneinander angeordneten Teilsiebe 43, 43' auf, die jeweils mit einem ihnen zugeordneten Rahmen 45 ausgestattet und mitsamt der Verstellantriebe 74, 74' zu Wartungs- und Reinigungszwecken getrennt aus dem Siebkasten 38 herausnehmbar sind. Jedes der Teilsiebe 43, 43' ist mit einem separaten, ihm zugeordneten Verstellantrieb 74, 74' zur Verstellung der Sieböffnungsweite ausgestattet. Die Bauelemente des rechts eingezeichneten Teilsiebs 43' sind jeweils mit einem Apostroph gekennzeichnet, während die des links eingezeichneten Teilsiebs 43 kein Apostroph tragen. Die Teilsiebe des Obersiebes 40 sind ebenfalls mit ihnen jeweils zugeordneten Antrieben 76 versehen, obwohl denkbar wäre, sie durch nur einen Verstellantrieb 76 zu bewegen, der in an sich bekannter Weise über eine Querverbindung beide Teilsiebe verstellt.

Der in Figur 2 dargestellte Verstellantrieb 74 ist so an dem Rahmen 45 angeordnet, dass die Betätigungsrichtung annähernd senkrecht zur Schwingrichtung S der Siebe ist. Die Öffnungsweite der schematisch dargestellten Lamellen 44 kann mittels der Verstellstange 52 und eines um eine vertikale Achse schwenkbaren Umlenkhebels 80 eingestellt werden. Mit dem Umlenkhebel 80 gekoppelte, elektrisch angetriebene Linearmotoren 84, 84' sind an jeweils einer mit dem Rahmen 45 verbundenen Konsole 88, 88' befestigt. Über eine flexible, mehradrige, elektrische Leitung 86 wird der Linearmotor 84 gesteuert sowie die Sieböffnungsweite, die mittels eines innerhalb des Gehäuses des Linearmotors 84 angeordneten Sensors ermittelt wird, einer Steuerung 100 rückgemeldet, beziehungsweise dem Bediener in der Fahrerkabine angezeigt. Besonders geeignet ist die direkte Anbindung der Verstellvorrichtung an ein in dem Mähdrescher 10 vorhandenes Daten-Bussystem. Hierdurch lässt sich die Anzahl der Adern der Leitung 86 und dadurch die mitschwingende Leitungsmasse reduzieren. Die Leitung 86 ist mittels einer beim Herausnehmen des Rahmens 45 aus dem Siebkasten 38 sich selbsttätig lösenden Steckverbindung 87 mit dem Linearmotor 84, 84' gekoppelt.

In Figur 3 ist ein Untersieb 42 mit einer zweiten Ausführungsform eines Verstellantriebs 74 dargestellt. Auch hier ist das Untersieb 42 aus zwei seitlich nebeneinander angeordneten Teilsieben 43, 43' zusammengesetzt. Bauteile des rechten Teilsiebs 43' werden wie in Figur 2 durch einen Apostroph gekennzeichnet.

Jedes der Teilsiebe 43, 43' weist als Verstellantrieb 74 einen Elektromotor 90 auf, der durch einen konsolenartigen Halter 88 an der Rückseite des Rahmens 45 befestigt ist. Der Elektromotor 90 hat eine in Drehung versetzbare Welle 92, welche ein erstes Zahnrad 94 antreibt. Die Welle 92 erstreckt sich in der Fahrtrichtung des Mähdreschers 10, die mit der Schwingrichtung S der Siebe zusammenfällt. Das erste Zahnrad 94 wirkt mit einem zweiten Zahnrad 98 mit parallel zur Welle 92 verlaufender Drehachse zusammen. In der Mitte des zweiten Zahnrads 98 ist ein Innengewinde angeordnet, in das ein am hinteren Ende der Verstellstange 52 eingebrachtes Außengewinde eingreift. Da die Verstellstange 52 durch geeignete Formgebung nur in ihrer Längsrichtung verschiebbar, aber nicht drehbar gelagert ist, wird durch das Innen- und Außengewinde eine Drehung des zweiten Zahnrads 98 in eine Verschiebebewegung der Verstellstange 52 umgesetzt. Der Elektromotor 90 kann in an sich bekannter Weise mit einem Sensor versehen sein, der den Drehwinkel seiner Welle 92 erfasst. Alternativ kommt ein Schrittmotor zur Anwendung. In beiden Fällen kann die elektrisch mit dem Sensor und dem Elektromotor 90 in Verbindung stehende Steuerung 100 den Elektromotor 90 derart drehen lassen, dass die Lamellen 44 in die jeweils gewünschte Stellung verbracht werden. Die Welle 92 des Elektromotors 90 erstreckt sich in der Schwingrichtung S der Siebe, was den Vorteil hat, dass die Siebbewegung keinen Einfluss auf den Rotor des Elektromotors 90 hat.

Die in der Bedienerkabine 34 des Mähdreschers 100 angeordnete Steuerung 100, welche die Verstellantriebe 74, 74' ansteuert, ist neben den die Stellung der Lamellen 44 erfassenden Sensoren mit verschiedenen weiteren Sensoren verbunden. Ein Neigungssensor 102 erfasst die seitliche Neigung des Mähdreschers 10, beispielsweise mit einem Lotgewicht, das ein Potentiometer antreibt. Unter den Teilsieben 43, 43' des Untersiebs ist jeweils ein Abscheidesensor 104 angeordnet, der die Menge des von den Teilsieben 43, 43' nach unten abgegebenen Korns misst. In der Figur 1 ist nur ein einzelner Sensor erkennbar, jedoch zeigen die Figuren 2 und 3 die zwei Sensoren 104.

Anhand des Signals des Neigungssensors 102 steuert die Steuerung 100 die Verstellantriebe 74, 74' derart unterschiedlich an, dass im Hangeinsatz, in dem der vom Mähdrescher 10 befahrene Boden seitlich gegenüber der Vertikalen geneigt ist, das hangauf gelegene Teilsieb 43 oder 43' weiter geschlossen als das hangab gelegene Teilsieb ist.

Die Sensoren 104 und 104' ermöglichen, die Kornabscheidung der Teilsiebe 43, 43' zu erfassen. Die Steuerung 100 steuert die Verstellantriebe 74, 74' getrennt und gegebenenfalls unterschiedlich an, um mit den Teilsieben 43, 43' jeweils optimale Abscheidungen zu erzielen.

## Patentansprüche

1. Reinigungseinrichtung (26) für einen Mähdrescher (10) mit einem Sieb (42), das mit einem Rahmen (45) und darin befestigten, verstellbaren Lamellen (44) ausgestattet ist, die mittels eines motorbetriebenen Verstellantriebs (74) einstellbar sind, wobei das Sieb (42) mindestens zwei in einer gemeinsamen Ebene in Vorwärtsfahrtrichtung des Mähdreschers (10) seitlich nebeneinander angeordnete Teilsiebe (43, 43') mit jeweils einem Rahmen (45, 45') umfasst, wobei den Teilsieben (43, 43') getrennte Verstellantriebe (74, 74') zugeordnet sind, **dadurch gekennzeichnet, dass** die Verstellantriebe (74, 74') mit einer Steuerung (100) verbunden sind, die eingerichtet ist, die Verstellantriebe (74, 74') derart anzusteuern, dass die Lamellen der Teilsiebe (43, 43') in unterschiedliche Stellungen verbracht werden, und dass die Steuerung (100) mit einem Neigungssensor (102) verbunden und eingerichtet ist, die Verstellantriebe (74, 74') derart anzusteuern, dass bei einem Hangeinsatz das hangauf befindliche Teilsieb (43, 43') weiter geschlossen ist als das hangab befindliche Teilsieb (43, 43').

2. Reinigungseinrichtung (26) nach Anspruch 1, **dadurch gekennzeichnet, dass** der Verstellantrieb (74, 74') am Rahmen (45) des Teilsiebs (43, 43') befestigt ist.

3. Reinigungseinrichtung (26) nach Anspruch 1 oder 2, **dadurch gekennzeichnet, dass** die Teilsiebe (43, 43') separat aus einem Siebkasten (38) herausnehmbar sind, wobei Anschlusselemente des Verstellantriebs (74, 74') beim Herausnehmen selbsttätig von im Siebkasten (38) verbleibenden Anschlüssen gelöst und beim Einbauen selbsttätig damit verbunden werden.

4. Reinigungseinrichtung (26) nach einem der Ansprüche 1 bis 3, **dadurch gekennzeichnet, dass** die Steuerung (100) eingerichtet ist, die Verstellantriebe (74, 74') abhängig von Ausgangssignalen von Sensoren (104, 104') zu regeln, die den Teilsieben (43, 43') zugeordnet sind.

5. Reinigungseinrichtung (26) nach Anspruch 4, **dadurch gekennzeichnet, dass** die Sensoren (104, 104') die Abscheidung von Korn und/oder Nichtkornbestandteilen unter dem Teilsieb (43, 43') erfassen.

## Claims

1. Cleaning assembly (26) for a harvester thresher (10) with a sieve (42), which is equipped with a frame (45) and adjustable louvres (44) fastened therein that are adjustable by means of a motor-driven adjusting drive (74), wherein the sieve (42) comprises at least two sieve elements (43, 43'), which are arranged adjacent to one another in a common plane in the direction of forward travel of the harvester thresher (10) and each have a frame (45, 45'), wherein separate adjusting drives (74, 74') are associated with the sieve elements (43, 43'), **characterised in that** the adjusting drives (74, 74') are connected to a controller (100), which is arranged to actuate the adjusting drives (74, 74') in such a way that the louvres of the sieve elements (43, 43') are brought into different positions, and that the controller (100) is connected to an inclination sensor (102) and is arranged to actuate the adjusting drives (74, 74') in such a way that when operated on a hill, the uphill sieve element (43, 43') is closed further than the downhill sieve element (43, 43').

2. Cleaning assembly (26) according to Claim 1, **characterised in that** the adjusting drive (74, 74') is fastened to the frame (45) of the sieve element (43, 43').

3. Cleaning assembly (26) according to Claim 1 or 2, **characterised in that** the sieve elements (43, 43') can be removed separately from a cleaning shoe (38), wherein during removal connection elements of the adjusting drive (74, 74') are automatically released from connections remaining in the cleaning shoe (38) and during installation are automatically connected thereto.

4. Cleaning assembly (26) according to one of Claims 1 to 3, **characterised in that** the controller (100) is arranged to control the adjusting drives (74, 74') as a function of output signals from sensors (104, 104') associated with the sieve elements (43, 43').

5. Cleaning assembly (26) according to Claim 4, **characterised in that** the sensors (104, 104') detect the separation of grain and/or non-grain constituents below the sieve element (43, 43').

## Revendications

1. Dispositif de nettoyage (26) pour une moissonneuse-batteuse (10), comportant un crible (42), qui est muni d'un cadre (45) et de lamelles (44) réglables, qui sont fixées dans ce dernier et qui peuvent être réglées au moyen d'un mécanisme de réglage (74) actionné par un moteur, le crible (42) comportant au moins deux cribles partiels (43, 43'), qui sont agencés dans un plan commun l'un à côté de l'autre dans le sens d'avancement de la moissonneuse-batteuse (10) et qui sont munis chacun d'un cadre (45, 45'), des mécanismes de réglage (74, 74') séparés étant associés aux cribles partiels (43, 43'), **caractérisé en ce que** les mécanismes de réglage (74, 74') doivent être activés de telle sorte que les lamelles des cribles partiels (43, 43') sont amenées dans des positions différentes, et **en ce que** le dispositif de commande (100) est relié à un capteur d'inclinaison (102) et est conçu pour activer les mécanismes de réglage (74, 74') de telle sorte que, en présence d'une pente, le crible partiel (43, 43') situé vers le haut de la pente est davantage fermé que le crible partiel (43, 43') situé vers le bas de la pente.

2. Dispositif de nettoyage (26) selon la revendication 1, **caractérisé en ce que** le mécanisme de réglage (74, 74') est fixé sur le cadre (45) du crible partiel (43, 43').

3. Dispositif de nettoyage (26) selon la revendication 1 ou 2, **caractérisé en ce que** les cribles partiels (43, 43') peuvent être démontés séparément hors d'un caisson pour crible (38), des éléments d'assemblage du mécanisme de réglage (74, 74') se désolidarisant automatiquement d'éléments d'assemblage restant dans le caisson pour crible (38) au moment du démontage et s'assemblent à nouveau automatiquement avec ceux-ci au moment du montage.

4. Dispositif de nettoyage (26) selon l'une quelconque des revendications 1 à 3, **caractérisé en ce que** le dispositif de commande (100) est conçu pour régler les mécanismes de réglage (74, 74') en fonction des signaux de sortie des capteurs (104, 104') qui sont associés aux cribles partiels (43, 43').

5. Dispositif de nettoyage (26) selon la revendication 4, **caractérisé en ce que** les capteurs (104, 104') détectent la séparation des graines et/ou des constituants sans graines sous le crible partiel (43, 43').
